# EUROPEAN PATENT APPLICATION

(11) **EP 1 798 966 A1**
(43) Date of publication of application: **20.06.2007**
(21) Application number: 06016966.1
(22) Date of filing: 14.08.2006
(51) Int. Cl.: H04N 5/445

(54) **Method of displaying progress bar and television receiver using the same**

(30) Priority: 15.12.2005 KR 20050123891
(71) Applicant: LG Electronics Inc., Yongdungpo-Gu Seoul 150-010 (KR)
(72) Inventor: Lim, Jong Ok, Haman-gun Gyeongsangnam-do (KR)
(74) Representative: Katérle, Axel

(57) **Abstract**

A method of displaying a progress bar and to a television receiver using the same, enables a plurality of stored broadcast programs to be identified according to broadcast channel or broadcast program. The method includes steps of pre-storing, in a memory of the television receiver, a plurality of display characterization indicators, the pre-stored indicators being arranged in a table of the memory to correspond to a plurality of broadcast program characteristics of at least one broadcast signal; storing, in a personal video recorder of the television receiver, a broadcast signal received by the television receiver in real time; periodically extracting broadcast program markers from the received broadcast signal, each marker being indicative of at least one of the plurality of broadcast program characteristics; and displaying the progress bar according to the extracted broadcast program markers, the displayed progress bar being superposed on a display of the broadcast signal. Each currently extracted broadcast program marker is compared with the broadcast program marker immediately preceding the currently extracted broadcast program marker, to determine whether there is a match between any adjacent two of the extracted broadcast program markers. If the compared broadcast program markers match, display of the progress bar proceeds using a first display characterization indicator, and if the compared broadcast program markers do not match, display of the progress bar proceeds using a second display characterization indicator.

## Description

This application claims the benefit of Korean Patent Application No. 10-2005-0123891, filed on December 15, 2005, which is hereby incorporated by reference as if fully set forth herein.

### BACKGROUND OF THE INVENTION

### Field of the Invention

The present invention relates to television receivers, and more particularly, to a method of displaying a progress bar and to a television receiver using the same.

### Discussion of the Related Art

A television receiver provided with a personal video recorder includes a storage medium such as a hard disc drive for recording (storing) and reproducing video signals including their associated audio components. The stored signals are digital video signals that are input to the television receiver and may be broadcast signals received from a broadcast station or other signals such as those supplied from a peripheral device connected to the television receiver. In any case, the input signals are encoded for storage in a transport stream format.

For instance, a television broadcast receiver provided with a personal video recorder (PVR) may employ a hard disc drive as a storage medium to enable a received broadcast signal or an external input signal from an external player to be stored in and reproduced from the hard disc according to a time-shift function in response to a user selection input. Such a time-shift function enables playback functions of pause, reverse play, fast or slow play, and the like for displaying a real-time broadcast signal or other, similarly received, video stream.

A contemporary television receiver provided with a PVR receives a broadcast signal in real time, stores the received broadcast signal in a time-shift storage area of the PVR's storage medium, and displays a time-shift guide using on screen display (OSD) data superposed on the displayed (viewed) video signal of the broadcast signal. The time-shift guide includes a progress bar for indicating a quantity of data storage, i.e., a storage status of the broadcast signal in the time-shift storage area, and for enabling a user control of a selective playback of the stored broadcast signal to be selected for playback. The storage status of a broadcast signal is typically displayed using a cache bar, and a movable indicator is provided for designating a specific point along the progress bar, the specific point corresponding to the currently viewed broadcast signal, which is then read out from the storage medium from the corresponding point.

In the contemporary television receiver as above, however, the progress bar only indicates the storage status (data storage quantity) of the broadcast signal, so that, if different broadcast programs are consecutively stored in the storage area, it is difficult to discriminate the stored broadcast programs, thereby encumbering use of the time-shift function. In other words, there is no means for discriminating among plurality of stored broadcast programs of a single stream. The discrimination is particularly difficult if broadcast channels are changed while storing a broadcast signal for executing the time-shift function or if playback of a specific program within a long-running data stream is desired, so that the user is forced to perform a tedious search of the content of stored streams.

### SUMMARY OF THE INVENTION

Accordingly, the present invention is directed to a method of displaying a progress bar and to a television receiver using the same that substantially obviates one or more problems due to limitations and disadvantages of the related art.

An object of the present invention is to provide a method of displaying a progress bar and to a television receiver using the same, by which a plurality of stored broadcast programs can be identified according to broadcast channel.

Another object of the present invention is to provide a method of displaying a progress bar and to a television receiver using the same, by which a plurality of stored broadcast programs can be identified according to broadcast program.

Another object of the present invention is to provide a method of displaying a progress bar and to a television receiver using the same, which facilitates a user's discrimination of the content of a stored stream of a broadcast signal received in real time.

Another object of the present invention is to provide a method of displaying a progress bar and to a television receiver using the same, which facilitates a use of a time-shift function for a stored stream of a broadcast signal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages in accordance with the purpose of the invention, as embodied and broadly described herein, there is provided a method of displaying a progress bar in a television receiver. The method comprises pre-storing, in a memory of the television receiver, a plurality of display characterization indicators, the pre-stored indicators being arranged in a table of the memory to correspond to a plurality of broadcast program characteristics of at least one broadcast signal; storing, in a personal video recorder of the television receiver, a broadcast signal received by the television receiver in real time; periodically extracting broadcast program markers from the received broadcast signal, each marker being indicative of at least one of the plurality of broadcast program characteristics; comparing each currently extracted broadcast program marker with the broadcast program marker immediately preceding the currently extracted broadcast program marker, to determine whether there is a match between any adjacent two of the extracted broadcast program markers; and displaying the progress bar according to the extracted broadcast program markers, the displayed progress bar being superposed on a display of the broadcast signal.

According to another aspect of the present invention, there is provided a television receiver comprising memory for pre-storing a plurality of display characterization indicators, the pre-stored indicators being arranged in a table of the memory to correspond to a plurality of broadcast program characteristics of at least one broadcast signal; a personal video recorder for storing a broadcast signal received by the television receiver in real time and enabling a time-shift function; a controller for periodically extracting broadcast program markers from the received broadcast signal, each marker being indicative of at least one of the plurality of broadcast program characteristics; a display module for displaying a progress bar according to the extracted broadcast program markers; an on-screen display (OSD) generator for generating OSD data representative of the progress bar and a time-shift function of the personal video recorder; and a transport stream output circuit for outputting to the display module a video signal superposing the OSD data on the broadcast signal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1A is a block diagram of a television receiver having a PVR according to the present invention;

FIG. 1B is a block diagram of the TS output circuit of FIG. 1A;

FIG. 2A is flowchart of a process for displaying a progress bar representing a storage progress status according to the present invention;

FIG. 2B is flowchart of a process for displaying a progress bar representing a display progress status according to the present invention;

FIGS. 3A-3C are diagrams of exemplary tables pre-stored in memory according to the present invention;

FIG. 4 is a diagram of an exemplary configuration of a progress bar according to the present invention;

FIG. 5 is a diagram of an exemplary progress bar including contrasting display areas for discriminating the channel of a received broadcast signal being stored according to the present invention; and

FIG. 6 is a diagram of an exemplary progress bar including contrasting display areas for discriminating the program of a stored broadcast signal being reproduced according to the present invention.

### DETAILED DESCRIPTION OF THE INVENTION

Reference will now be made in detail to exemplary embodiments of the present invention, examples of which are illustrated in the accompanying drawings. Wherever possible, like reference designations will be used throughout the drawings to refer to the same or similar parts.

The present invention is applicable to video apparatuses capable of storing a video signal received from various input sources such as a tuner or a peripheral device. For example, a tuner 101 may be provided to receive a user-specified broadcast signal by tuning among available terrestrial or cable broadcast signals to thereby provide a digital input signal or an analog input signal, and a peripheral device such as a digital camcorder or DVD player may be connected to a television receiver via an external signal input port 102 for supplying a video signal to be stored. The video signal input to a video apparatus adopting the present invention is encoded to provide a data stream configured in a transport packet format, i.e., a plurality of serially arranged transport packets each comprising a header and a payload. While a digital broadcast signal as provided from a broadcast station is already configured in a transport stream format, an analog broadcast signal may be encoded locally. The video signal from a peripheral device may require similar encoding prior to storage as a transport stream (TS), and for the sake of convenience, a broadcast signal as described herein may also refer to an input to the television receiver as received from the peripheral device via an external signal input port. The present invention is exemplified herein by describing a television receiver having a personal video recorder or PVR.

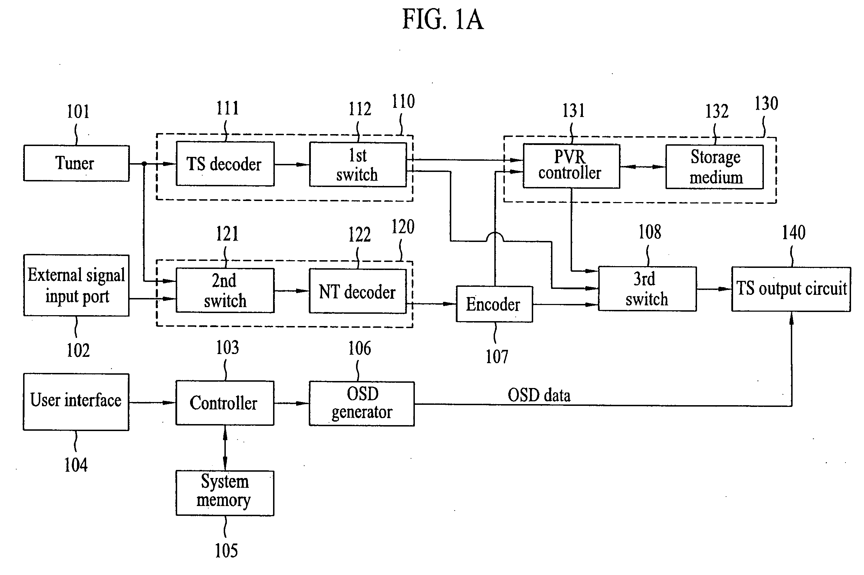

Referring to FIG. 1A, a television receiver according to the present invention may be configured to include a controller 103 for receiving a user selection signal via a user interface 104, e.g., a remote controller or local keypad, to control the system and to perform a time control function using a system memory 105 and for outputting on-screen display (OSD) data to an OSD generator 106 according to an operation of the time control function; a digital broadcast signal processor 110 for processing a digital input signal from the tuner 101, using a TS decoder 111 and a first switch 112; an analog broadcast signal processor 120 for processing an analog input signal from the tuner, using a second switch 121 and an NTSC (NT) decoder 122; a PVR unit 130, including a PVR controller 131 and a storage medium 132, for storing and reproducing the digital input signal or analog input signal (herein referred to as a broadcast signal), which may be a tuned signal input supplied from the tuner and encoded by an encoder 107 or a video signal input from the external signal input port 102 and similarly encoded; a third switch 108; and a TS output circuit 140 for outputting (displaying) a transport stream, e.g., broadcast signal, provided by the digital or analog broadcast signal processors or the PVR unit. Accordingly, as the present invention relates to a time-shift function enabled by storing a broadcast signal on one channel in real time, the following description considers for the sake of convenience that a broadcast signal is stored in the storage medium 132, though as it will be described, other input signals similarly received by the television receiver may be similarly stored.

The controller 103 communicates with each of the above elements via a bus (not shown) for providing control signals according to a user selection made via the user interface 104 and a program stored in the system memory 105, e.g., a general memory device different from the storage medium 132, which as a rule requires a significantly greater capacity than the system memory. Accordingly, the controller 103 performs an overall control of the television broadcast receiver, and the system memory 105 stores various system information including a system program of the controller.

In particular, the controller 103 determines whether a previous viewing channel is the same as a current viewing channel, i.e., whether a viewing channel is switched. If the viewing channel is switched, the controller 103 generates a control signal output the OSD generator 106 to change a progress bar display type, such as its color, pattern, or other display characterization enabling a visible contrast in the displayed image, so that the progress bar proceeds using the new display characterization. Accordingly, the OSD generator 106 outputs OSD data for forming a time-shift progress bar according to the control signal from the controller 103.

The system memory 105 pre-stores a plurality of display characterization indicators for controlling the display and formation of the progress bar, and each display characterization indicator is stored in correspondence to a plurality of broadcast program markers for identifying a specific program as well as its broadcast channel. The display characterization indicators may be based on a plurality of colors and/or patterns and are stored according to the storage of received broadcast programs. The system memory 105 stores address information designating a position at which each of the broadcast programs is stored within the PVR unit 130 under the control of the controller 103. Hence, the system memory 105 stores the address information of each broadcast program and information corresponding to the progress bar display type and the program marker or markers of each broadcast signal.

The third switch 108 selects a signal to be processed by the TS output circuit 140. The selected signal may be the output of the digital signal processor 110, i.e., a received digital broadcast signal; the output of the encoder 107, i.e., a received signal such as an analog broadcast signal or peripheral device input that has been encoded into a transport stream format; or the output of the PVR unit 130, i.e., the stored transport stream that is being reproduced. That is, the third switch 108 has three inputs and one selectable output.

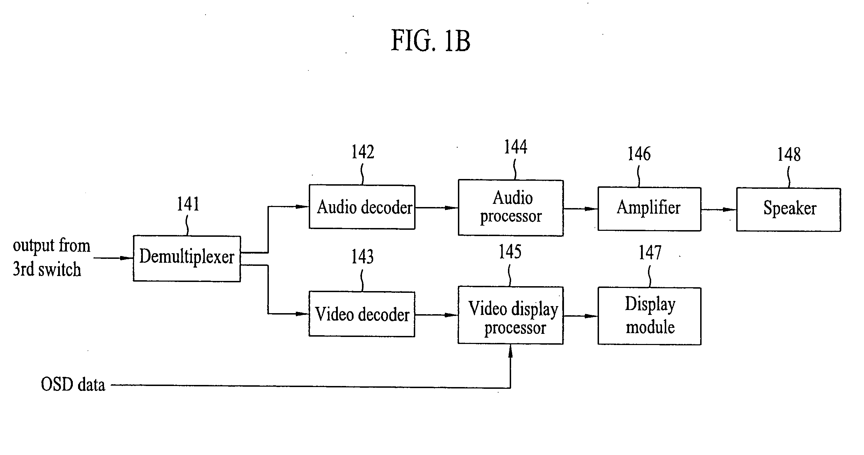

An example of the TS output circuit 140 may be seen in FIG. 1B. Here, the TS output circuit 140 includes a demultiplexer 141 for outputting separated data streams, i.e., a video stream and an audio stream, an audio decoder 142, a video decoder 143, an audio processor 144, a video display processor 145, an amplifier 146, a display module 147, and a speaker 148. The audio decoder 142 and the video decoder 142 decode the data streams separately output from the demultiplexer 141 and respectively provide the decoded streams to the audio processor 144 and the video display processor 145. The audio processor 144, amplifier 146, and speaker 148 convert the decoded audio signal into an audible audio signal. The video display processor 145 processes the decoded video signal to be displayed by the display module 147, which may be a PDP module, an LCD module, or a flat CRT module, while overlaying (superposing) OSD data from the OSD generator 106, such that the OSD data is displayed together with the processed video signal.

The digital broadcast signal processor 110 receives a digital broadcast signal from the tuner 101. The TS decoder 111 of the digital broadcast signal processor 110 decodes the received signal, to output separated data streams to the first switch 112, and extracts program and system information protocol (PSIP) information from the broadcast signal. The extracted PSIP information is provided to the controller 103. The output data streams include a video stream, one or more audio streams, and a stream of additional information associated with the video and audio streams. According to a control of the controller 103, the first switch 112 selectively outputs the data streams to the PVR unit 130, to the TS output circuit 140, or to both.

The analog broadcast signal processor 120 receives an analog broadcast signal from the tuner 101 or a video signal input from the external signal input port 102. The second switch 121 of the analog broadcast signal processor 120 selects one of the two signals according to a control of the controller 103, to output the selected signal to the NT decoder 120, which decodes the received signal and outputs separated audio data and video data. This data is then encoded by the encoder 107 into a transport stream format, such as an MPEG signal, for storage the PVR unit 130 or processing by the TS output circuit 140. The encoder 107 may be incorporated into the PVR controller 131, to be alternatively embodied as a combination controller & encoder for the PVR unit 130. In the event of the received broadcast signal being an analog broadcast signal, which contains no PSIP information, the program marker consists essentially of channel information. As known in the art, channel information can be obtained (extracted) via a channel manager.

The PVR unit 130 receives a digital broadcast signal from the digital broadcast signal processor 110 or a video signal input from the analog broadcast signal processor 120 and encoded by the encoder 107. Accordingly, the PVR controller 131 of the PVR unit 130 receives a transport stream and stores the received transport stream in the storage medium 132 under the control of the controller 103. A time-shift storage area allocated for executing the time-shift function is provided within the hard disc, i.e., the storage medium 132, so that a transport stream comprised of a video stream, audio stream, and additional data streams corresponding to a broadcast signal may be sequentially stored in the time-shift storage area in its order of reception. Addresses of the time-shift storage area, where corresponding transport streams are stored, are provided to the controller 103 by the PVR controller 131.

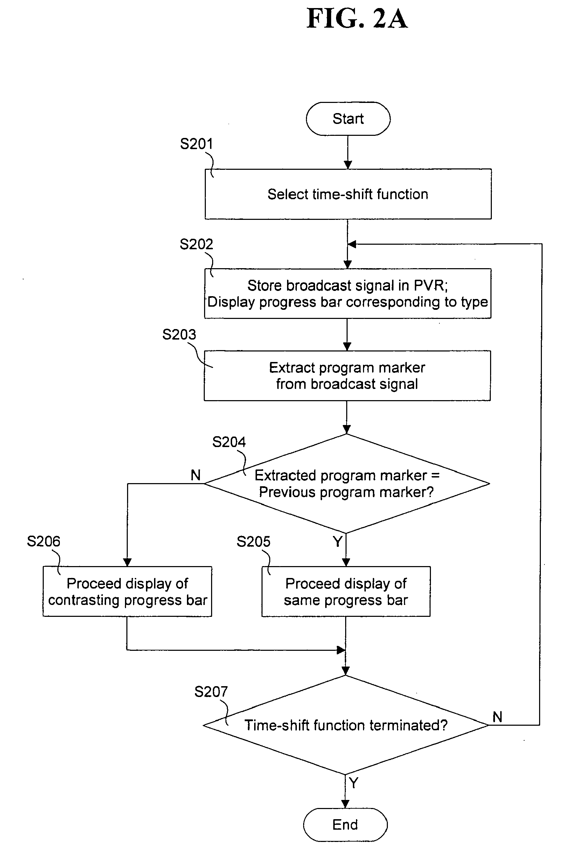

Referring to FIG. 2A, in response to a user selection of a time-shift function via the user interface 104 (S201), the controller 103 begins to store a currently viewed broadcast signal in the PVR unit 130. In doing so, a progress bar representing a storage progress status of the broadcast signal is simultaneously displayed on the screen according to type, which corresponds to a display characteristic indicator (S202).

The stored broadcast signal is comprised of a series of transport packets containing PSIP information identifying specific programs being broadcast on specific channels. Meanwhile, a plurality of display characterization indicators is pre-stored in the system memory 105 and arranged in table form to correspond to a plurality of broadcast program characteristics of at least one broadcast signal. Thus, the received broadcast signal contains a series of broadcast program markers directly relating to the received broadcast signal, such that each marker is indicative of at least one of the plurality of broadcast program characteristics. That is, the broadcast program markers are included in the PSIP information embedded in a transport stream of the received broadcast signal and may be used to identify the broadcast program by channel number or by individual program. If the received broadcast signal is an analog signal, only channel information is available, but if the received broadcast signal is a digital signal, the broadcast program marker may be used to identify a large amount of very specific programming information, including program genre, program title, and the time and date of a broadcast in addition to its channel. Accordingly, by periodically extracting broadcast program markers from the received broadcast signal (S203), the progress bar is displayed according to the corresponding display characterization indicator. Here, the PSIP information including the program markers may be extracted using the TS decoder 111 or a channel manager (not shown) or may be extracted from the stored broadcast signal itself, which has undergone PSIP information decoding during reception.

The controller 103 compares each currently extracted broadcast program marker with the broadcast program marker immediately preceding the currently extracted broadcast program marker, to determine whether there is a match between any adjacent two of the extracted broadcast program markers (S204). If the compared broadcast program markers match, the display of the progress bar proceeds using a first display characterization indicator of the plurality of display characterization indicators (S205). If the compared broadcast program markers do not match, the display of the progress bar proceeds using a second display characterization indicator of the plurality of display characterization indicators (S206). Here, the first and second display characterization indicators define contrasting images, which may include different colors and patterns. Thus, the displayed progress bar of the step S202 includes a plurality of display areas adjacently arranged in correspondence to the extracted broadcast program markers, so that, if a change occurs between any adjacent two of the extracted broadcast program markers, the corresponding display areas have contrasting images. The displayed progress bar is superposed on a current display of the broadcast signal, i.e., in correspondence to the indicator, and the progress bar display continues as above until the user terminates the time-shift function selected in the step S201 (S207).

Accordingly, when the viewing channel is changed or when a broadcast channel proceeds to its next program, the controller 103 obtains from the system memory 105 address information corresponding to the new channel or program by referring to the program marker in the PSIP information and thereby identifies a corresponding display characterization indicator. Thus, under the control of the controller 103, the broadcast signal corresponding to the new program marker is stored in the time-shift storage area according to the obtained address information, and the progress bar is displayed to represent a storage progress status of the received broadcast signal.

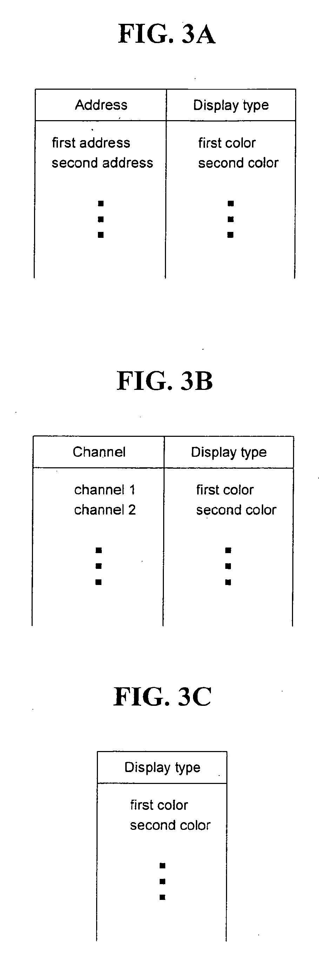

FIG. 3A shows an example of a storage format, e.g., a lookup table, of the address information correlating to the display characterization indicators, which represent storage or display progress statuses of the broadcast signals according to the program marker. The lookup table may be pre-stored in the system memory 105 by a television receiver manufacturer.

FIG. 3B shows a specific relationship, that may be set by the manufacturer, between a set of program markers (e.g., channels) and a set of display characterization indicators (e.g., colors). Here, the controller 103 references the channel number of the table to determine a progress bar display type (color, pattern, etc.). It is unnecessary, however, to provide a specific relation between display characterization indicator and program marker, since, if a change occurs between any adjacent two of the extracted broadcast program markers, the corresponding display areas may be imparted with contrasting images according to a sequence of at least two display types, as demonstrated in FIG. 3C. As an alternative, the display characterization indicator to program marker relation may be established using an algorithm. For example, the controller 103 may reference the table to see whether a color has been assigned to a corresponding channel and may assign an arbitrary color when there has been no previous assignment for the corresponding channel.

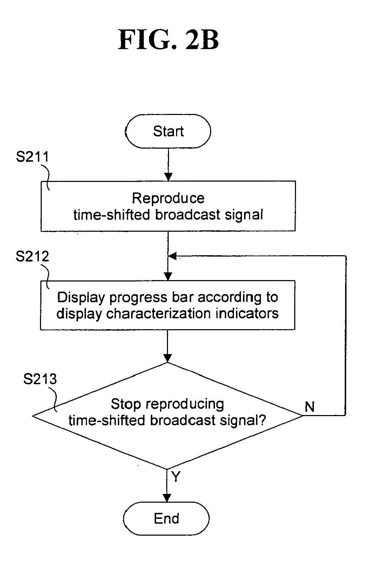

Meanwhile, FIG. 2B illustrates the case of a user selecting the reproduction of a time-shifted broadcast signal, which has been stored according to FIG. 2A, and the user may select the desired content using the user interface 104 to manipulate the indicator of the displayed progress bar and thereby reproduce the stored broadcast signal from a point specified by the user (S211). Then, rather than a progress bar representing a storage progress status of the received broadcast signal as in FIG. 2A, the displayed progress bar represents a display progress status of the stored broadcast signal, which is simultaneously displayed with the progress bar. Thus, the progress bar is displayed according to the display characterization indicators stored in the table of the system memory 105, to indicate the arrangement of program markers corresponding to the quantity of a data stream stored in the time-shift storage area (S212). Here, the program markers may be extracted from the stored broadcast signal. Progress bar display continues until time-shift reproduction is terminated (S213).

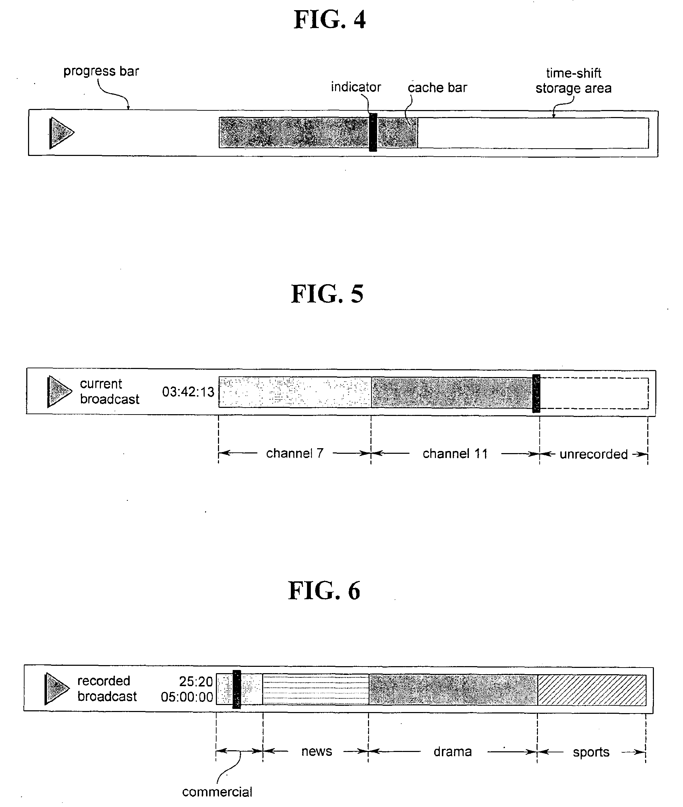

FIG. 4 shows an example of a basic configuration of a progress bar according to the present invention. Here, the progress bar includes an indicator and a cache bar progressing within a display area corresponding to a time-shift storage area capacity. The indicator indicates a position at which a broadcast signal is being stored in the time-shift storage area or a current display (viewing) position of the stored broadcast signal. The cache bar represents a storage or display progress status of the broadcast signal.

FIG. 5 shows an exemplary progress bar including contrasting images in adjacent display areas for discriminating a received broadcast signal being stored, and FIG. 6 shows an exemplary progress bar including contrasting images in adjacent display areas for discriminating a stored broadcast signal being reproduced, i.e., being displayed to be viewed using a time-shift function. Here, the storage progress status of FIG. 5 discriminates according to channel, and the display progress status of FIG. 6 discriminates according to genre (or broadcast time and date, program title, etc.). Here, it should be appreciated that the "unrecorded" area of FIG. 5 may be occupied by previously stored content, in which case the progress bar display would correspond to type accordingly, while FIG. 6 assumes that the stored broadcast signal occupies the entire time-shift storage area. Each display area of the progress bar corresponds to an address of the time-shift storage area.

Embodiments of the present invention include a computer-readable medium storing a set of program commands for executing operations implemented by a computer. The computer-readable medium may include the program commands, a data file, a data structure, and other computer-program-related data. The medium and the stored program commands are configured in accordance with the present invention and may be specifically designed for the above-described embodiment or may comprise a device and program combination known to those skilled in the field of computer software.

Accordingly, storage and display progress statuses of a corresponding broadcast signal can be displayed with contrasting images or display types according to broadcast program information, i.e., a marker included in the PSIP information that identifies a broadcast channel, a program genre, or the like. Thus, a plurality of stored broadcast programs can be identified according to broadcast channel or according to broadcast program, to facilitate a user's discrimination of the content of a stored stream of a broadcast signal received in real time and to facilitate a use of a time-shift function for a stored stream of a broadcast signal.

It will be apparent to those skilled in the art that various modifications can be made in the present invention without departing from the spirit or scope of the invention. Thus, it is intended that the present invention covers such modifications provided they come within the scope of the appended claims and their equivalents.

## Claims

1. A method of displaying a progress bar in a television receiver, the method comprising:
pre-storing, in a memory of the television receiver, a plurality of display characterization indicators, the pre-stored indicators being arranged in a table of the memory to correspond to a plurality of broadcast program characteristics of at least one broadcast signal;
storing, in a personal video recorder of the television receiver, a broadcast signal received by the television receiver in real time;
periodically extracting broadcast program markers from the received broadcast signal, each marker being indicative of at least one of the plurality of broadcast program characteristics; and
displaying the progress bar according to the extracted broadcast program markers, the displayed progress bar being superposed on a display of the broadcast signal.

2. The method of claim 1, wherein the displayed progress bar includes a plurality of display areas arranged according to a sequence of the extraction of the broadcast program markers.

3. The method of claim 1, further comprising:
comparing each currently extracted broadcast program marker with the broadcast program marker immediately preceding the currently extracted broadcast program marker, to determine whether there is a match between any adjacent two of the extracted broadcast program markers.

4. The method of claim 3, further comprising:
proceeding said progress bar displaying using a first display characterization indicator of the plurality of display characterization indicators, if the compared broadcast program markers match; and
proceeding said progress bar displaying using a second display characterization indicator of the plurality of display characterization indicators, if the compared broadcast program markers do not match.

5. The method of claim 3, wherein the displayed progress bar includes a plurality of display areas adjacently arranged in correspondence to the extracted broadcast program markers and wherein, if a change occurs between any adjacent two of the extracted broadcast program markers, the corresponding display areas have contrasting images.

6. The method of claim 5, wherein the contrasting images of the display areas are based on at least one of the plurality of display characterization indicators.

7. The method of claim 1, wherein the broadcast program markers are extracted from the received broadcast signal.

8. The method of claim 7, wherein the progress bar represents a progress status of said broadcast signal storing.

9. The method of claim 1, wherein the display of the broadcast signal is time-shifted.

10. The method of claim 9, wherein the progress bar represents a progress status of the display of the broadcast signal.

11. The method of claim 1, wherein the broadcast program markers are extracted from the stored broadcast signal.

12. The method of claim 1, wherein the broadcast program markers are included in program and system information protocol (PSIP) information embedded in a transport stream of the received broadcast signal.

13. The method of claim 1, wherein the broadcast program markers identify at least one of a broadcast channel and a broadcast program.

14. The method of claim 1, wherein each of the plurality of display characterization indicators defines a different color of the progress bar.

15. The method of claim 1, wherein each of the plurality of display characterization indicators defines a different pattern of the progress bar.

16. A television receiver, comprising:
memory for pre-storing a plurality of display characterization indicators, the pre-stored indicators being arranged in a table of said memory to correspond to a plurality of broadcast program characteristics of at least one broadcast signal;
a personal video recorder for storing a broadcast signal received by the television receiver m real time and enabling a time-shift function;
a controller for periodically extracting broadcast program markers from the received broadcast signal, each marker being indicative of at least one of the plurality of broadcast program characteristics; and
a display module for displaying a progress bar according to the extracted broadcast program markers.

17. The television receiver of claim 16, wherein said controller compares each currently extracted broadcast program marker with the broadcast program marker immediately preceding the currently extracted broadcast program marker, to determine whether there is a match between any adjacent two of the extracted broadcast program markers, and wherein the display of the progress bar proceeds using a first display characterization indicator of the plurality of display characterization indicators, if the compared broadcast program markers match, and proceeds using a second display characterization indicator of the plurality of display characterization indicators, if the compared broadcast program markers do not match.

18. The television receiver of claim 16, wherein said controller compares each currently extracted broadcast program marker with the broadcast program marker immediately preceding the currently extracted broadcast program marker, to determine whether there is a match between any adjacent two of the extracted broadcast program markers, wherein the displayed progress bar includes a plurality of display areas adjacently arranged in correspondence to the extracted broadcast program markers, and wherein, if a change occurs between any adjacent two of the extracted broadcast program markers, the corresponding display areas have contrasting images.

19. The television receiver of claim 18, wherein the contrasting images of the display areas are based on at least one of the plurality of display characterization indicators.

20. The television receiver of claim 16, further comprising:
an on-screen display (OSD) generator for generating OSD data representative of the progress bar and a time-shift function of said personal video recorder; and
a transport stream output circuit for outputting to said display module a video signal superposing the OSD data on the broadcast signal.
